# EUROPEAN PATENT SPECIFICATION

(11) **EP 1 691 924 B1**
(45) Date of publication and mention of the grant of the patent: **14.09.2016**
(21) Application number: 03768079.0
(22) Date of filing: 10.12.2003
(51) Int. Cl.: B01L 3/00, F16L 39/00, F15C 5/00

(54) **A MODULAR BIOCHIP ASSEMBLY**
MODULARE BIOCHIP ANORDNUNG
ENSEMBLE DE BIOPUCES MODULAIRE

(43) Date of publication of application: 23.08.2006
(73) Proprietor: The Provost, Fellows, Foundation Scholars, & the other members of Board, of the College of the Holy & Undiv. Trinity of Queen Elizabeth near Dublin, Dublin 2 (IE)
(72) Inventor: VIVIENNE, Williams, Gorey, County Wexford (IE); IGOR, Schvets, Dublin 5 (IE); DMITRI, Kashanin, Dublin 14 (IE); DERMOT, Kelleher, Dun Laoghaire, County Dublin (IE); SIOBHAN, Mitchell, Dublin 6 (IE)
(74) Representative: Litton, Rory Francis
(86) International application number: PCT/IE2003/000166
(87) International publication number: WO 2005/056186

(56) References cited:
- EP-A- 1 252 929
- WO-A-99/14368
- WO-A-02/070942
- WO-A-03/072251
- US-A- 6 086 740
- US-A1- 2002 124 896
- SCHUENEMANN M ET AL: "A highly flexible design and production framework for modularized microelectromechanical systems" SENSORS AND ACTUATORS A, ELSEVIER SEQUOIA S.A., LAUSANNE, CH, vol. 73, no. 1-2, 9 March 1999 (1999-03-09), pages 153-168, XP004167331 ISSN: 0924-4247
- GRAY B L ET AL: "Novel interconnection technologies for integrated microfluidic systems" SENSORS AND ACTUATORS A, ELSEVIER SEQUOIA S.A., LAUSANNE, CH, vol. 77, no. 1, 28 September 1999 (1999-09-28), pages 57-65, XP004244547 ISSN: 0924-4247

## Description

The present invention relates to a biochip assembly comprising a plurality of enclosed elongate microchannels, each microchannel having an inlet port adjacent one of its proximal and distal ends, and an outlet port adjacent its other end; a plurality of reservoir wells for use with the microchannels; an enclosed liquid delivery channel assembly having two or more combined inlet and outlet ports, at least one forming an inlet port and at least one other forming an outlet port; and an enclosed sample holder transfer assembly for connecting a port of one module to a port or reservoir well of another module and for connecting two reservoir wells together.

Various biochip assemblies and, in particular, methods for using such biochip assemblies have been previously described in our co-pending PCT Patent Application Nos. IE02/00107 (WO 03/060056) and No. 02/00060 (WO 02/090771) and European Patent Specification Nos. EP 1252929 and EP 1221617. The disclosure of all these patent specifications is included herewith by way of reference. In these specifications, various biochip assemblies are described, together with various assays that may be carried out using such biochips. In particular, these specifications describe various biological assays and, in particular, various configurations of microchannels that may be used in such biochips.

It may be stated, with a fair deal of certainty, that microfluidics, namely the science of handling minute volumes of liquid, has promised to and undoubtedly will revolutionise the way many researchers execute testing procedures in a laboratory of various disciplines, whether it be chemistry or biology. Microfluidic devices offer significant potential advantages over current use instrumentation, particularly in terms of savings in costs and, often more importantly, in both sample and reagent consumption.

Microfluidics can be employed within the area of cell based assays in order to mimic the continuous flow regime of microcapillaries, as has been described in the above-referenced patent specifications.

In this specification, the term "biochip", is used to relate to a microfluidic device in which the sample of reagent liquid is transported along the device in order to perform an experiment. For this, the device must have an appropriate network of microchannels. This definition falls under the assembly of paradigms called "Laboratory on a Chip". This should be distinguished from a DNA or protein biochip. The latter are based on a completely different technology in which an assembly of DNA fragments or proteins are statically spotted on a substrate. They are described confusingly by the same word "biochip" (or DNA/protein biochip).

There are various problems at the present moment with biochips, principally arising from the fact that they are relatively complex devices designed by individuals for specific experiments, rather than being universal in use. They are thus essentially specific biochip assemblies, designed and manufactured for a specific requirement, rather than more universal use. Additionally, the robustness of biochip assemblies needs to be improved. Effectively, this means that the construction of the biochip assemblies needs to be simplified.

A further problem with the present construction of biochip assemblies is that they are not easy to integrate with the normal equipment available in laboratories. The user is too often restricted to purchasing an expensive controller for each kind of biochip developed by a particular individual or company. It is essential that such biochip assemblies be usable with a wide range of inter alia optical readers, MALDI mass spectrometers, DNA sequencers and other common laboratory equipment.

A further problem with current biochip assemblies relates to the transfer of samples to and from the various parts of the biochip assembly. Ideally, the biochip should be capable of operating with conventional manual and automated devices for sample transfer (usually called pipettors).

Finally, it is essential that the cost of the biochip assembly be reduced and in particular, that the biochip assembly have reduced maintenance or operating costs in the sense that each experiment or test does not lead to considerable expenditure in relation to the biochip assembly.

US 2002/0124896 discloses a modular microfluidic system comprising a number of microfluidic modules which are fluidically coupled to perform a desired sequence of operations. WO02/070942 discloses a device for demountably and sealingly connecting a number of capillary columns mounted on a support to a microfluidic component. WO 03/072251 discloses a multiple plug connector for use in microfiluid systems.

### Statements of Invention

According to the invention, there is provided a biochip assembly comprising:
a plurality of enclosed elongate microchannels, each microchannel having an inlet port adjacent one of its proximal and distal ends; and an outlet port adjacent its other end;
a plurality of reservoir wells for use with the microchannels;
an enclosed liquid delivery channel assembly having two or more combined inlet and outlet ports, at least one forming an inlet port and at least one other forming an outlet port; and
an enclosed sample holder transfer assembly for connecting a port of one part of the biochip assembly to a port or reservoir well of another part and for connecting two reservoir wells together, characterised in that the biochip assembly comprises:
   a main support frame comprising a base frame and an upper frame mounting between them a plurality of separate and removable biochip modules, namely an input module forming the enclosed liquid delivery channel assembly, at least one reservoir well containing module and a microchannel containing module and in which the enclosed sample holder transfer assembly comprises a pair of support plates; a plurality of rigid tubes mounted on each support plate for engagement with the modules and with transfer conduits for connecting a rigid tube on one support plate with a rigid tube on the other support plate, and the upper frame mounts upstanding posts having slots for reception of the support plates, and releasable connection means for mounting the sample holder transfer assembly.

The advantage of this is that by having removable biochip modules, it only becomes necessary to dispose of those modules that are contaminated during a particular experiment. In many instances, it is advantageous to dispose of the microchannel containing module. Generally, particular modules and components may be removed for cleaning and re-use. Further, any module may be removed for cleaning and re-use. It also allows test specific modules to be used.

In one embodiment of the invention, the transfer conduits are of a flexible material.

In another embodiment, there are two reservoir containing modules.

Preferably, a reservoir containing module is arranged on either side of the microchannel containing module with the input module adjacent one of the reservoir containing modules. This allows for easy transfer of reagent and sample.

In another embodiment of the invention, releasable connection means are provided on the main support frame for securing each of the support plates in spaced-apart relationship with each of the input module and the microchannel containing module and with each rigid tube connecting in liquid sealing manner with the appropriate port. The advantage of this is that there would be no liquid escape or the ingress of air.

In one embodiment of the invention, each port comprises a compressible seal for engagement with a rigid tube.

In another embodiment, the releasable connection means is adapted to engage the rigid tube with the compressible seal to form a liquid seal. This ensures adequate sealing against air ingress and liquid leaking.

In another embodiment of the invention, the cross-sectional area of the microchannel varies along its length. The advantage of this is that one can now carry out experiments using the biochip for situations, for example, where capillaries or other portions of a patient's body might be constricted in some way. For example, blocking of arteries and the like, could be easily studied.

In another embodiment of the invention, the microchannel containing module comprises:
sheets of flat plastics material laminated together to form an upper layer having through holes for forming input ports and output ports;
an intermediate layer having cut-out through slots forming microchannels; and
a base layer.

This is a particularly easy way of manufacturing a microchannel. It will also allow any shape of microchannel to be manufactured easily.

In one embodiment of the invention, the intermediate layer is of a photo-resist fluoro-polymer material, secured to the other layers by ultraviolet (UV) curing. This is a particularly easy way of manufacturing the microchannel containing module.

In another embodiment of the invention, the intermediate layer is of a photo-resist fluoro-polymer material secured to the top layer by ultraviolet (UV) curing and the bottom layer is a peel-off sheet of polyester film, secured to the intermediate layer by an adhesive. This allows the bottom layer to be subsequently peeled off and further experiments carried out. It also could allow the microchannel containing module to be cleaned and re-used.

### Detailed Description of the Invention

The invention will be more clearly understood from the following description of some embodiments thereof, given by way of example only, with reference to the accompanying drawings, in which:-
Fig. 1 is a diagrammatic layout of an assay assembly using a biochip assembly according to the invention,
Fig. 2 is a perspective view of a biochip assembly according to the invention, in one position of use,
Fig. 3 is a perspective view of a sample holder transfer assembly forming part of the biochip assembly,
Fig. 4 is a perspective view of biochip modules forming part of the biochip assembly of the invention,
Fig. 5 is a perspective view of more of the frame forming part of the invention,
Fig. 6 is a plan view of the biochip modules of Fig. 4 and the portion of the frame illustrated in Fig. 5, assembled together,
Fig. 7 is a perspective view of part of a main support frame forming part of the biochip assembly,
Fig. 8 is a sectional view along the lines VIII-VIII of Fig. 2,
Fig. 9 is a sectional view along the lines IX-IX of Fig. 2,
Fig. 10 is a perspective view of another microchannel containing module according to the invention,
Fig. 11 is a plan view of the module of Fig. 10,
Fig. 12 is a view, similar to Fig. 6, of portion of another biochip assembly according to the invention,
Fig. 13 is another view, similar to Fig. 6, of portion of a still further biochip assembly according to the invention,
Fig. 14 is a side view of a microchannel containing module according to the invention,
Fig. 15 is a typical side sectional view of the microchannel containing module of Fig. 14,
Fig. 16 is an exploded perspective view of the microchannel containing module of Figs. 14 and 15; and
Fig. 17 is a side view, similar to Fig. 15, of an alternative microchannel containing module according to the invention.

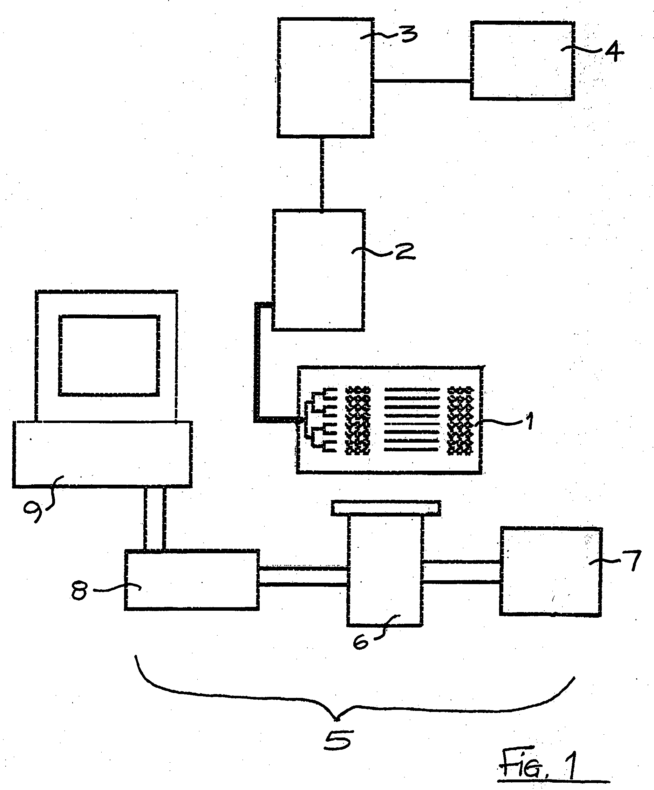

Referring to the drawings, and initially to Fig. 1, there is illustrated diagrammatically a biochip assembly 1, within a typical assay assembly with most of the parts shown in outline. The assay assembly comprises typically, a liquid delivery unit 2, such as, for example, a nanopump, as described in some of our co-pending patent applications. The liquid delivery system 2 would generally be controlled by a controller 3 and computer 4. Similarly, there is provided detection and recording equipment, indicated generally by the reference numeral 5, which typically would comprise an optical inverted microscope 6, an epifluorescence device 7 and a digital camera 8, all of which are controlled by a suitable computer and recorder 9. All of this has been previously described in the above-referenced patent specifications and does not require any more description.

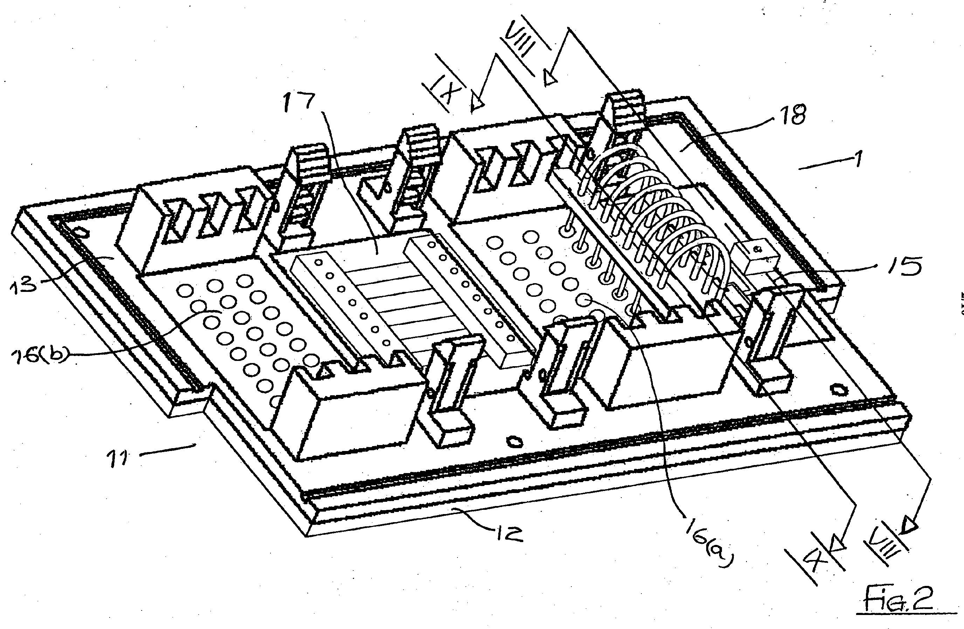

Referring now to Fig. 2, the biochip assembly 1 comprises a main support frame 11 comprising a base frame 12 and an upper frame 13, mounting between them is a plurality of separate and removable biochip modules, namely, an input module 15, a pair of reservoir well containing modules 16 and a microchannel containing module 17. A sample holder transfer assembly, indicated generally by the reference numeral 18, is illustrated mounted above the input module 15 and one of the reservoir well containing modules 16.

Since there are two reservoir well containing modules 16 in the embodiment described above, they are distinguished by the letters (a) and (b), the reservoir well containing module 16(a) being between the input module 15 and the microchannel containing module 17 and effectively forming input wells. Similarly, as described below, the reservoir well containing module 16(a) has three sets of wells 33, distinguished again by the letters (a), (b) and (c). Further, the wells 33 in the reservoir well containing modules 16(b) are identified by the reference letters (d), (e) and (f).

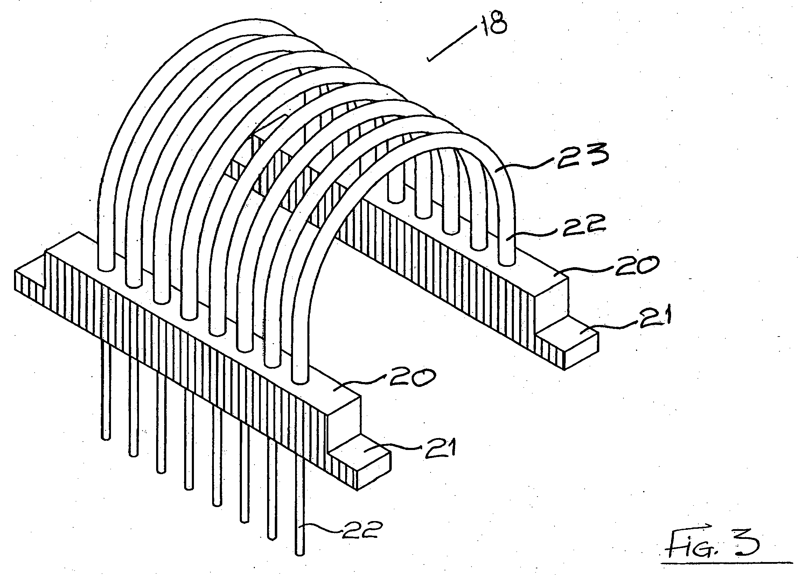

Referring now to Fig. 3, the sample holder transfer assembly 18 comprises a pair of support plates 20, each plate having a cut-away shelf 21 and mounting a plurality of rigid tubes 22 which project above and below each support plate 20. The tubes 22 are connected by a plurality of flexible transfer conduits 23.

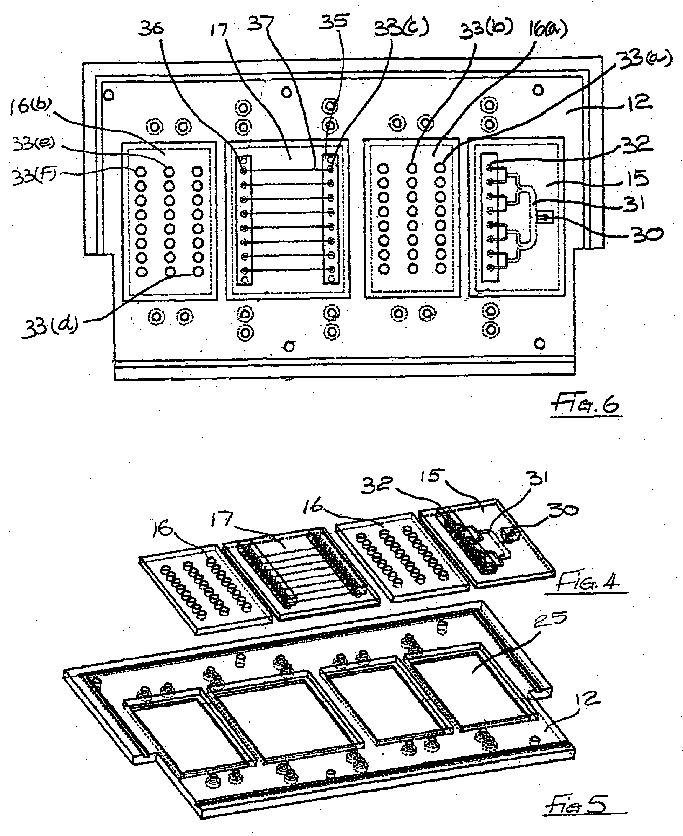

Referring to Figs. 4 to 7, there is illustrated the input module 15, the reservoir containing modules 16(a) and 16(b) and the microchannel containing module 17, all of which will be described in more detail. They are generally mounted within the base frame 12, illustrated in Fig. 5, slotting into holes 25 of the base frame 12.

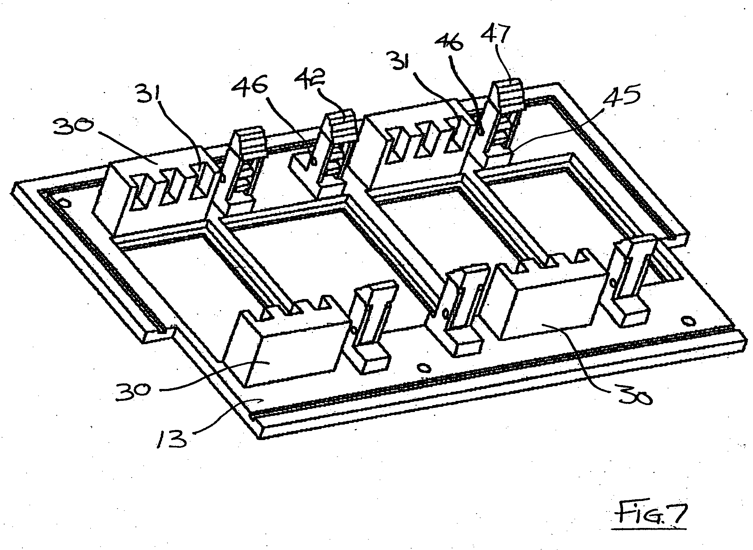

The upper frame 13, illustrated in Fig. 7, retains the modules 15, 16(a), 16(b) and 17 tight against the base frame 12. The upper frame 13 mounts upstanding posts 30 having slots 31 for reception of the support plates 20 of the sample holder transfer assembly 18. It also mounts releasable connection means 42, again for mounting the sample holder transfer assembly 18, as described in more detail below.

Referring now to Fig. 6, the input module 15 forms an enclosed liquid distribution system having an input port 30, enclosed distribution channels 31 and output ports 32. The reservoir containing modules 16 carries three sets of wells 33. As stated already, the reservoir containing modules 16 and their respective wells 33 are distinguished by the letters (a) and (b): and (a), (b), (c) and (d) (e), (f) respectively. The microchannel containing module 17 has a plurality of input ports 35 and output ports 36 connected by microchannels 37. In Fig. 6, they are shown as straight microchannels. The ports 30, 32, 35 and 36 are all exposed, as are the wells 33. However, the microchannels 37 and the channels 31 are enclosed. Their construction will be described in more detail later.

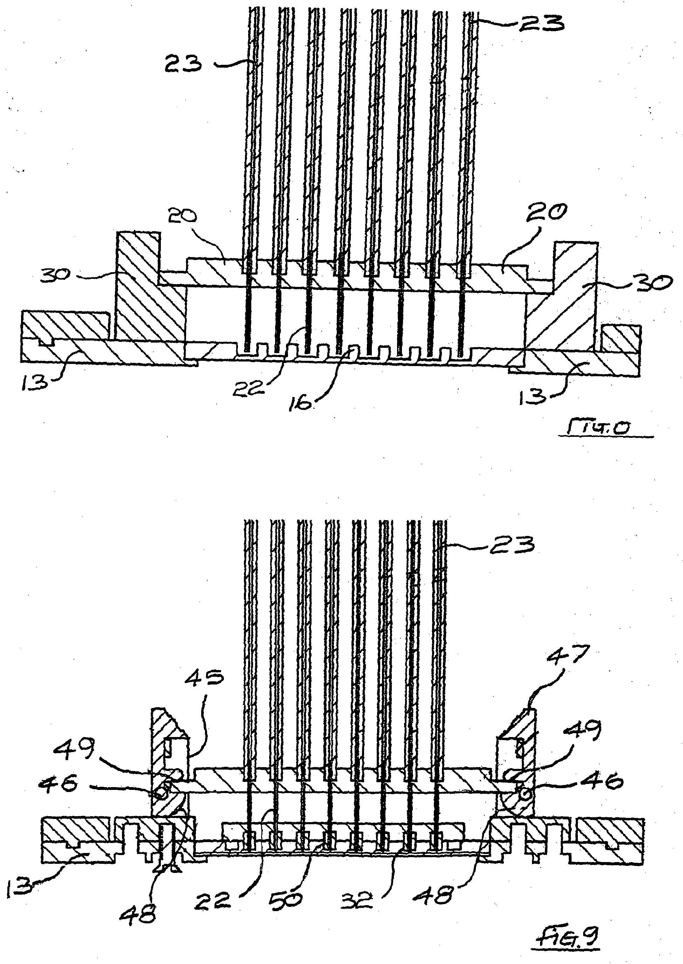

Referring now to Fig. 8, it will be seen how the support plates 20 are mounted within the slots 31 to allow the rigid tubes 22 project into the wells 16.

Referring to Figs. 7 and 9, there is illustrated the releasable connection means 42 which comprises a support frame 45 mounting a pivot bar 46 on which is mounted a toggle lever 47 having an arcuate camming surface 48 for engagement with the upper frame 13 and having a slot 49 for reception of the shelf 21 of the support plate 20. It can be readily easily seen how the support plate 20 will be rigidly held on the mainframe 11 exerting a downward pressure.

Also illustrated in Fig. 9 are compressible inserts or seals 50 mounted in the output ports 32. Similar compressible seals 50 are provided in the other ports 35 and 36, although not in the input port 30 which will have any suitable construction for connection to the necessary liquid delivery system 2.

For completeness, it is necessary to describe briefly how an assay is carried out with the biochip assembly 1, such as, for example, for a cell adhesion study. Different ligands would be provided in each of two sets of the wells 33(a) and 33(b) of the reservoir containing module 16(a), namely the one closest to the input module 15. The ligands could, for example, be deposited there by pipetting or any suitable way. In some experiments, the number of transfer conduits 23 can be smaller than the microchannels in the microchannel containing module 17. For example, the same sample containing suspension cells could be placed in one of the wells 33(a), (b) or (c) of the reservoir well containing module 16(a). Typically, both the ligands and the sample liquids are placed in different sets of wells 33(a), (b) or (c), of the same reservoir well containing modules 16(a). To take the very simplest test and ignoring all operations such as flushing out of the system or using system liquid for propulsion, a cell adhesion test, in its simplest, can be described, for example, somewhat as follows. Two sample holder transfer assemblies 18 would normally be used simultaneously.

### Step 1

A syringe pump or other suitable pumping means is connected to the inlet port 30.

### Step 2

The sample holder transfer assembly 18 is connected between one of the wells, for example, the wells 33(a), containing a ligand which will have been pipetted or placed in it by any suitable means, and the output port 32 of the input module 15.

### Step 3

**T**he ligand is aspirated into the sample holder transfer assembly 18.

### Step 4

The sample holder transfer assembly 18 is disconnected from the wells 33(a) and is connected to the input port 35 of the microchannel containing module 17.

### Step 5

Ligand is then delivered into each microchannel 37 to coat the interior thereof.

### Step 6

Replace the sample holder transfer assembly 18 or alternatively, clean it thoroughly.

### Step 7

Connect to another set of the wells in the reservoir containing module 16, such as the wells 33(b), which contains a cell suspension.

### Step 8

Aspirate the cell suspension.

### Step 9

Disconnect the sample holder transfer assembly 18 from the wells 33(b) and connect to the input ports 35 of the microchannel containing module 17.

### Step 10

Deliver the cell suspensions through the microchannels 37 and carry out the test.

The above is a very simple explanation, for example, almost certainly, an additional sample holder transfer assembly would be used to connect the outlet ports 36 of the microchannel containing module 17 with one of the sets of wells 33(d), 33(e) and 33(f) of the reservoir containing module 16(b). This would be used, for example, firstly to store any surplus ligand in one set of the wells 33(d), 33(e) or 33(f). Then, one of the remaining two sets of wells of 33(d), 33(e) and 33(f), would be used to store the cell suspension after the test.

It must be appreciated that the above is a very simplified and indeed, incomplete description of how a test is carried out. However, the actual manner in which a test is carried out is not important, it is the manner in which the sample holder transfer assembly 18 and the various other modules 15, 16 and 17 interact which is important.

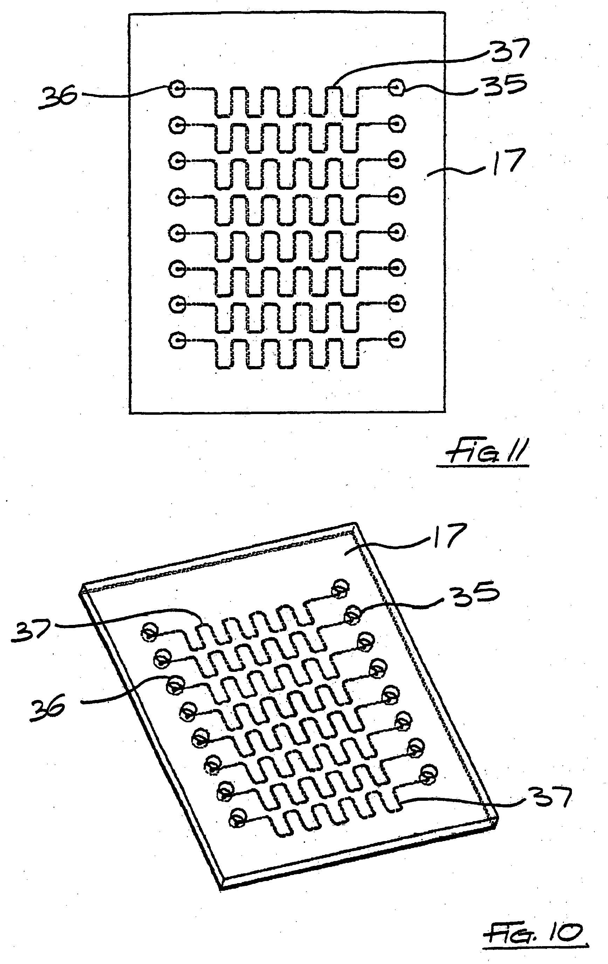

Referring to Figs. 10 and 11, there is illustrated an alternative construction of microchannel containing module, again identified by the reference numeral 17 and in which parts similar to those described, with reference to the previous drawings, are identified by the same reference numerals. In this embodiment, the microchannels 37 are each arranged to be in a pattern such as can be seen, to increase the length of the microchannel. Other similar patterns may be used.

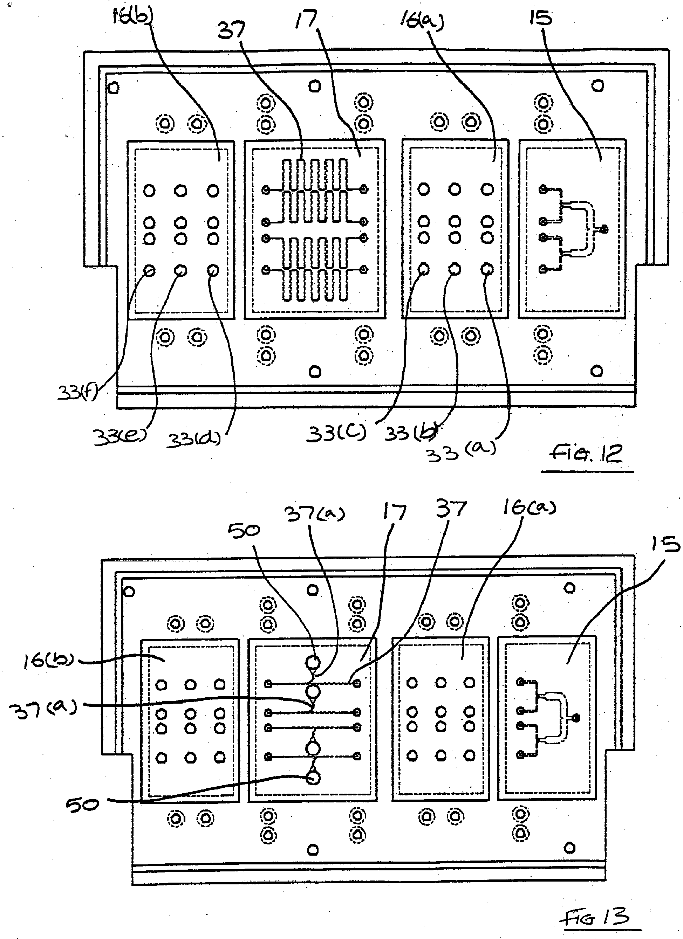

Referring to Fig. 12, there is illustrated another arrangement in which the various modules are again identified by the same reference numerals. In this embodiment, there is illustrated a different construction of input module 15, well containing modules 16(a) and 16(b), and microchannel containing module 17. There is no need to describe this in more detail, beyond stating that the microchannel containing module 15 now contains a splitter for four, rather than eight, microchannels 37, as in the previous embodiment.

Fig. 13 similarly illustrates again, the various modules, identified by the same reference numerals as before. In this embodiment, as well as having an elongate microchannel 37, there is an additional microchannel 37(a) connected to a microwell 50. This is illustrated to show how different microwells and different arrangements of microchannel containing modules 17 may be provided.

It should be appreciated that the arrangements of Figs. 11, 12 and 13 are simply illustrated to show that other arrangements of module are possible which will greatly increase the versatility of the biochip assembly 1.

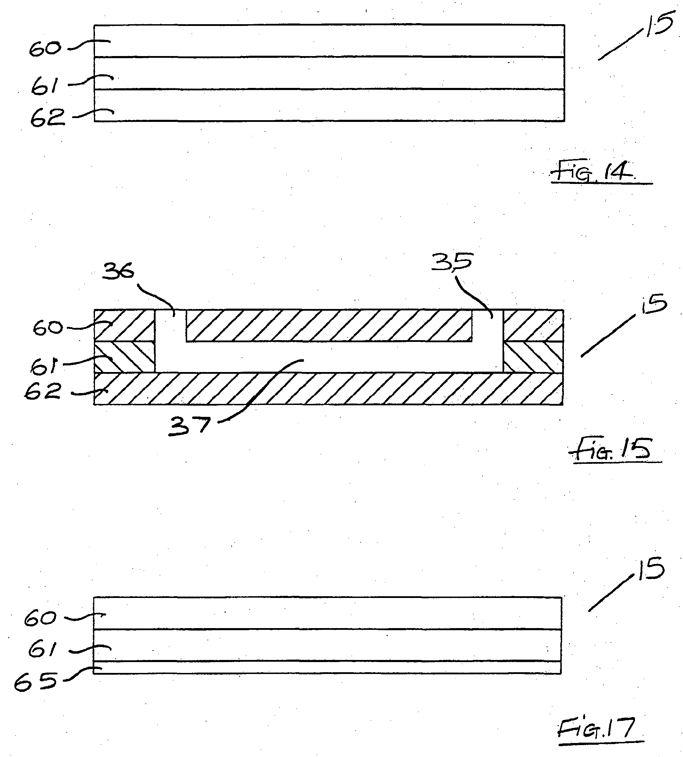

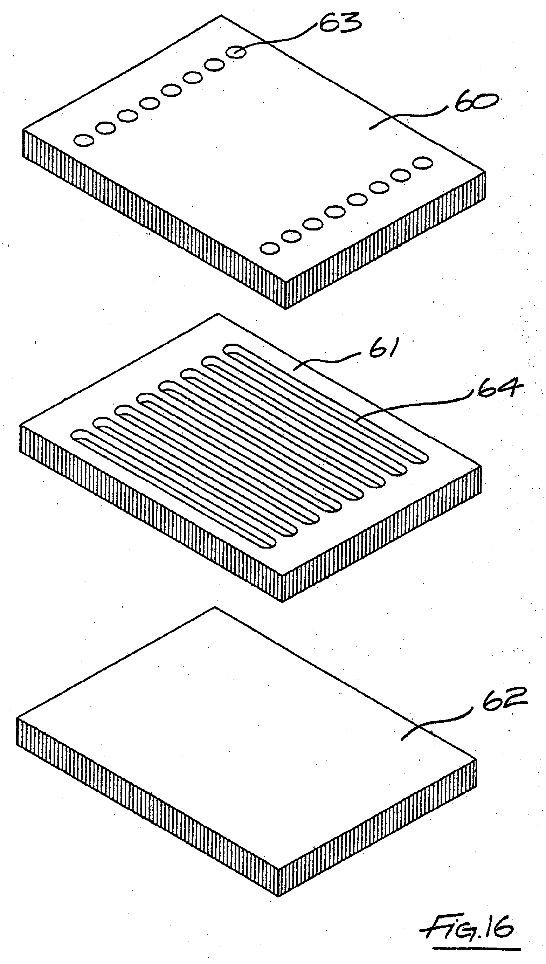

Referring now to Figs. 14 to 16, there is illustrated how a biochip containing module, again identified by the reference numeral 15, may be provided from three sheets of plastics material bonded together. Again, parts similar to those described, with reference to the previous drawings, are identified by the same reference numerals. This biochip containing module 15 comprises three sheets of flat plastics material laminated together to form an upper layer 60, an intermediate layer 61 and a base layer 62. The upper layer 60 has through holes 63 forming the input ports 35 and the output ports 36. The intermediate layer 61 has cut-out through slots 64 forming the microchannel 37. These are identified in Fig. 15. It will be appreciated that the upper layer 60 and the base layer 62 seal off the slots 64 to form the enclosed microchannels.

In one embodiment of the invention, the biochip modules is made of a mask of SU-8 photo-resist fluoro-polymer. This is used to form the intermediate layers 61 which is then sandwiched between the other two layers 60 and 62, followed by ultraviolet (UV) curing. Similar construction methods may be used to manufacture the input module 15 and the reservoir containing module 16.

Referring to Fig. 17, there is illustrated an alternative construction of microchannel containing module, again identified by the reference numeral 15, and comprising an upper layer 60 and an intermediate layer 61, all manufactured in exactly the same way as described with reference to the embodiment of Figs. 14 to 16 inclusive, and finally, a base layer 65 formed from a peel-off film of polyester film secured thereto by an adhesive.

It will be appreciated that one of the easy ways, with these constructions of varying the cross sectional area of the microchannel 37, is simply to increase or decrease the width of the slot 64.

While the enclosed sample holder transfer assembly 18 has been described as incorporating flexible transfer conduits, these are not necessarily essential.

It will be appreciated that with the present constructions, various types of modules may be provided and while the sample holder transfer assembly that has been illustrated is a particularly useful assembly, it will be possible to provide other constructions without departing from the scope of the invention, as defined in the claims.

What has to be appreciated with the present invention is that by using the Various modules, many sizes and shapes of microchannel, different arrangements of microchannel, different arrangements of reservoir wells, input modules and indeed, sample holder transfer assemblies, may be used. For example, the separation between the reservoir wells is ideally such that it matches one of the standard values of separations between wells in a conventional microtiter plate which is generally 9 mm or fractions thereof. Needless to say, other values of separation are possible and any numbers may be provided. Indeed, it will be appreciated that microchannel containing modules may be provided in various shapes and sizes to suit the particular type of test required.

While the present invention has been described for use with tests involving cells, it will be appreciated that various other tests may also be provided where such tests should be carried out in microchannels. Indeed, any non-cell based assay may also be carried out with the present biochip assembly.

It will be appreciated that various methods may be provided for cleaning the sample holder transfer assembly and the parts thereof. For example, the assembly may simply be removed and disposed of after being used, to aspirate and deliver any one liquid, whether it be a reaction liquid, a cell-based liquid or a ligand. Needless to say, they can be relatively easily cleaned. Further, flushing out, using a system liquid, may also be achieved.

It will be appreciated, as in the embodiments described above, and in particular those illustrated, the length of the microchannels have been greatly foreshortened. However, it will be appreciated that the microchannels can be lengthened by intertwining the microchannels, as shown, for example, in one embodiment. Indeed, any length of microchannel or indeed, any shape or cross-sectional shape of microchannel may be provided.

It should also be appreciated that one of the major advantages of the biochip assembly according to the present invention, is that the biochip can be easily integrated into other laboratory instruments. For example, they can be easily fitted into a micro plate reader which adds significant advantages over currently existing systems.

One of the major advantages of the biochip assembly, in accordance with the present invention, is the reduction in reagent or sample consumption. It will also facilitate reduced analysis time and larger transfer rates, due to the diminished distances involved. Further, it will be appreciated that the biochip assembly will facilitate the running of several assays in parallel.

It will also be appreciated that the use of plastics materials reduces significantly the cost of production.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied in both construction and detail within the scope of the claims.

## Claims

1. A biochip assembly (1) comprising:
a plurality of enclosed elongate microchannels, each microchannel having an inlet port adjacent one of its proximal and distal ends; and an outlet port adjacent its other end;
a plurality of reservoir wells for use with the microchannels;
an enclosed liquid delivery channel assembly having two or more combined inlet and outlet ports, at least one forming an inlet port and at least one other forming an outlet port; and
an enclosed sample holder transfer assembly for connecting a port of one part of the biochip assembly to a port or reservoir well of another part and for connecting two reservoir wells together, **characterised in that** the biochip assembly (1) comprises:
a main support frame (11) comprising a base frame (12) and an upper frame (13) mounting between them a plurality of separate and removable biochip modules (15, 16, 17), namely an input module (15) forming the enclosed liquid delivery channel assembly, at least one reservoir well containing module (16) and a microchannel containing module (17) and in which the enclosed sample holder transfer assembly (18) comprises a pair of support plates (20); a plurality of rigid tubes (22) mounted on each support plate (20) for engagement with the modules (15, 16, 17) and with transfer conduits (23) for connecting a rigid tube (22) on one support plate (20) with a rigid tube (22) on the other support plate (20), and the upper frame (13) mounts upstanding posts having slots for reception of the support plates (20), and releasable connection means (42) for mounting the sample holder transfer assembly (18).

2. A biochip assembly (1) as claimed in claim 1, in which the transfer conduits (23) are of a flexible material.

3. A biochip assembly (1) as claimed in claim 1 or 2, in which there are two reservoir containing modules (16(a) and 16(b)).

4. A biochip assembly (1) as claimed in claim 3, in which a reservoir containing module (16(a) and 16(b)) is arranged on either side of the microchannel containing module (17) with the input module (15) adjacent one of the reservoir containing modules (16).

5. A biochip assembly (1) as claimed in any preceding claim, in which releasable connection means (42) are provided on the main support frame (11) for securing each of the support plates (20) in spaced-apart relationship with each of the input module (15) and the microchannel containing module (17) and with each rigid tube (22) connecting in liquid sealing manner with the appropriate port (32, 35, 36).

6. A biochip assembly (1) as claimed in claim 5, in which each port (32, 35, 36) comprises a compressible seal (50) for engagement with a rigid tube (22).

7. A biochip assembly (1) as claimed in claim 6, in which the releasable connection means (42) is adapted to engage the rigid tube (22) with the compressible seal (50) to form a liquid seal.

8. A biochip assembly (1) as claimed in any preceding claim, in which the cross-sectional area of the microchannel (37) varies along its length.

9. A biochip assembly (1) as claimed in any preceding claim, in which the microchannel containing module (15) comprises:
sheets of flat plastics material laminated together to form an upper layer having through holes (63) for forming input ports (35) and output ports (36):
an intermediate layer (61) having cut-out through slots (64) forming microchannels (37); and
a base layer (62).

10. A biochip assembly (1) as claimed in claim 9, in which the intermediate layer (61) is of a photo-resist fluoro-polymer material, secured to the other layers (60 and 62) by ultraviolet (UV) curing.

11. A biochip assembly (1) as claimed in claim 9, in which the intermediate layer (61) is of a photo-resist fluoro-polymer material secured to the top layer (60) by ultraviolet (UV) curing and the bottom layer (62) is a peel-off sheet (65) of polyester film, secured to the intermediate layer (61) by an adhesive.

## Patentansprüche

1. Biochipanordnung (1), die Folgendes umfasst:
eine Vielzahl von eingeschlossenen langgestreckten Mikrokanälen, wobei jeder Mikrokanal seinem proximalen oder seinem distalen Ende benachbart einen Einlassanschluss und seinem anderen Ende benachbart einen Auslassanschluss aufweist;
eine Vielzahl von Speichernäpfen für die Verwendung mit den Mikrokanälen;
eine eingeschlossene Flüssigkeitszufuhr-Kanalanordnung mit zwei oder mehr kombinierten Einlass- und Auslassanschlüssen, wobei mindestens einer einen Einlassanschluss bildet und mindestens ein anderer einen Auslassanschluss bildet; und
eine eingeschlossene Probenhalter-Transferanordnung zum Verbinden eines Anschlusses eines Teils der Biochipanordnung mit einem Anschluss oder einem Speichernapf eines anderen Teils und zum Verbinden von zwei Speichernäpfen miteinander, **dadurch gekennzeichnet, dass** die Biochipanordnung (1) Folgendes umfasst:
einen Haupttragrahmen (11), umfassend eine Grundrahmen (12) und einen oberen Rahmen (13), die zwischen ihnen eine Vielzahl getrennter und abnehmbarer Biochipmodule (15, 16, 17) halten, und zwar ein Eingangsmodul (15), das die eingeschlossene Flüssigkeitszufuhr-Kanalanordnung bildet, mindestens ein Speichernapf-Aufnahmemodul (16) und ein Mikrokanal-Aufnahmemodul (17), und wobei die eingeschlossene Probenhalter-Transferanordnung (18) ein Paar Tragplatten (20) umfasst; wobei eine Vielzahl von starren Röhren (22) für den Eingriff mit den Modulen (15, 16, 17) und mit Transferleitungen (23) an jeder Tragplatte (20) angebracht sind, um eine starre Röhre (22) an einer Tragplatte (20) mit einer starren Röhre (22) an der anderen Tragplatte (20) zu verbinden, und wobei der obere Rahmen (13) aufrecht stehende Pfosten mit Schlitzen für die Aufnahme der Tragplatten (20) und lösbare Verbindungsmittel (42) zum Anbringen der Probenhalter-Transferanordnung (18) hält.

2. Biochipanordnung (1) nach Anspruch 1, wobei die Transferleitungen (23) aus einem biegsamen Material sind.

3. Biochipanordnung (1) nach Anspruch 1 oder 2, in der zwei Speicheraufnahmemodule (16(a) und 16(b)) vorhanden sind.

4. Biochipanordnung (1) nach Anspruch 3, wobei ein Speicheraufnahmemodul (16(a) und 16(b)) auf jeder Seite des Mikrokanal-Aufnahmemoduls (17) angeordnet ist, wobei das Eingangsmodul (15) einem der Speicheraufnahmemodule (16) benachbart ist.

5. Biochipanordnung (1) nach einem der vorangehenden Ansprüche, wobei lösbare Verbindungsmittel (42) auf dem Haupttragrahmen (11) vorgesehen sind, um jede der Tragplatten (20) in beabstandeter Beziehung mit dem Eingangsmodul (15) und dem Mikrokanal-Aufnahmemodul (17) zu fixieren, und wobei jede starre Röhre (22) auf flüssigkeitsdichtende Weise mit dem entsprechenden Anschluss (32, 35, 36) verbunden ist.

6. Biochipanordnung (1) nach Anspruch 5, wobei jeder Anschluss (32, 35, 36) eine komprimierbare Dichtung (50) für den Eingriff mit einer starren Röhre (22) umfasst.

7. Biochipanordnung (1) nach Anspruch 6, wobei das lösbare Verbindungsmittel (42) dazu angepasst ist, mit der starren Röhre (22) mit der komprimierbaren Dichtung (50) in Eingriff zu treten, um eine Flüssigkeitsdichtung zu bilden.

8. Biochipanordnung (1) nach einem der vorangehenden Ansprüche, wobei sich die Querschnittsfläche des Mikrokanals (37) entlang seiner Länge verändert.

9. Biochipanordnung (1) nach einem der vorangehenden Ansprüche, wobei das Mikrokanal-Aufnahmemodul (15) Folgendes umfasst:
Folien aus ebenem Kunststoff, die aneinander laminiert sind, um eine obere Schicht mit Durchgangslöchern (63) zu bilden, um Eingangsanschlüsse (35) und Ausgangsanschlüsse (36) zu bilden;
eine Zwischenschicht (61) mit ausgeschnittenen Durchgangsschlitzen (64), die Mikrokanäle (37) bilden; und
eine Grundschicht (62).

10. Biochipanordnung (1) nach Anspruch 9, wobei die Zwischenschicht (61) aus einem Fotolack-Fluorpolymermaterial ist, das durch Ultraviolett(UV)-Aushärten an den anderen Schichten (60 und 62) fixiert ist.

11. Biochipanordnung (1) nach Anspruch 9, wobei die Zwischenschicht (61) aus einem Fotolack-Fluorpolymermaterial ist, das durch Ultraviolett(UV)-Aushärten an der oberen Schicht (60) fixiert ist und es sich bei der unteren Schicht (62) um eine Abziehfolie (65) aus Polyesterfilm handelt, die mit einem Klebstoff an der Zwischenschicht (61) fixiert ist.

## Revendications

1. Ensemble biopuce (1) comportant :
une pluralité de microcanaux allongés fermés, chaque microcanal ayant un orifice d'entrée de manière adjacente par rapport à l'une de ses extrémités proximale et distale ; et un orifice de sortie de manière adjacente par rapport à son autre extrémité ;
une pluralité de puits de réservoir à des fins d'utilisation avec les microcanaux ;
un ensemble canal de distribution de liquide fermé ayant deux ou plusieurs orifices d'entrée et de sortie combinés, au moins un formant un orifice d'entrée et au moins un autre formant un orifice de sortie ; et
un ensemble de transfert de porte-échantillon fermé à des fins de raccordement d'un orifice d'une partie de l'ensemble biopuce à un orifice ou puits de réservoir d'une autre partie et à des fins de raccordement de deux puits de réservoir ensemble, **caractérisé en ce que** l'ensemble biopuce (1) comporte :
un cadre de support principal (11) comportant un cadre de base (12) et un cadre supérieur (13) à des fins de montage, entre eux, d'une pluralité de modules biopuces séparés et amovibles (15, 16, 17), à savoir un module d'entrée (15) formant l'ensemble canal de distribution de liquide fermé, au moins un module (16) contenant un puits de réservoir et un module (17) contenant un microcanal et dans lequel l'ensemble de transfert de porte-échantillon fermé (18) comporte une paire de plaques de support (20) ;
une pluralité de tubes rigides (22) montés sur chaque plaque de support (20) à des fins de mise en prise avec les modules (15, 16, 17) et avec des conduits de transfert (23) à des fins de raccordement d'un tube rigide (22) sur une plaque de support (20) avec un tube rigide (22) sur l'autre plaque de support (20), et le cadre supérieur (13) forme une monture pour des montants verticaux ayant des fentes pour la réception des plaques de support (20), et des moyens de raccordement libérables (42) à des fins de montage de l'ensemble de transfert de porte-échantillon (18).

2. Ensemble biopuce (1) selon la revendication 1, dans lequel les conduits de transfert (23) sont réalisés à partir d'un matériau souple.

3. Ensemble biopuce (1) selon la revendication 1 ou la revendication 2, dans lequel il y a deux modules (16(a) et 16(b)) contenant un réservoir.

4. Ensemble biopuce (1) selon la revendication 3, dans lequel un module (16(a) et 16(b)) contenant un réservoir est agencé d'un côté ou de l'autre du module (17) contenant un microcanal, le module d'entrée (15) se trouvant de manière adjacente par rapport à l'un des modules (16) contenant un réservoir.

5. Ensemble biopuce (1) selon l'une quelconque des revendications précédentes, dans lequel des moyens de raccordement libérables (42) sont mis en oeuvre sur le cadre de support principal (11) à des fins d'assujettissement de chacune des plaques de support (20) selon une relation espacée avec chacun parmi le module d'entrée (15) et le module (17) contenant un microcanal et avec chaque tube rigide (22) se raccordant de manière étanche aux liquides à l'orifice approprié (32, 35, 36).

6. Ensemble biopuce (1) selon la revendication 5, dans lequel chaque orifice (32, 35, 36) comporte un joint d'étanchéité compressible (50) à des fins de mise en prise avec un tube rigide (22).

7. Ensemble biopuce (1) selon la revendication 6, dans lequel le moyen de raccordement libérable (42) est adapté à des fins de mise en prise du tube rigide (22) avec le joint d'étanchéité compressible (50) pour former un joint liquide.

8. Ensemble biopuce (1) selon l'une quelconque des revendications précédentes, dans lequel la section transversale du microcanal (37) varie le long de sa longueur.

9. Ensemble biopuce (1) selon l'une quelconque des revendications précédentes, dans lequel le module (15) contenant un microcanal comporte :
des feuilles de matériau plastique plat stratifiées ensemble pour former une couche supérieure ayant des trous traversants (63) à des fins de formation d'orifices d'entrée (35) et d'orifices de sortie (36) ;
une couche intermédiaire (61) ayant des fentes traversantes découpées (64) à des fins de formation de microcanaux (37) ; et
une couche de base (62).

10. Ensemble biopuce (1) selon la revendication 9, dans lequel la couche intermédiaire (61) est réalisée à partir d'un matériau de polymère fluoré photorésistant, couche assujettie aux autres couches (60 et 62) par séchage ultraviolet (UV).

11. Ensemble biopuce (1) selon la revendication 9, dans lequel la couche intermédiaire (61) est réalisée à partir d'un matériau de polymère fluoré photorésistant, couche assujettie à la couche supérieure (60) par séchage ultraviolet (UV) et la couche inférieure (62) est une feuille pelable (65) de film de polyester, assujettie à la couche intermédiaire (61) par un adhésif.
